# EUROPEAN PATENT APPLICATION

(11) **EP 4 773 735 A1**
(43) Date of publication of application: **08.07.2026**
(21) Application number: 24868738.6
(22) Date of filing: 20.09.2024
(51) Int. Cl.: H05B 6/12, H05B 6/06, F24C 15/34, F24C 15/10, F24C 3/12, H02M 1/10

(54) **COIL ASSEMBLY**

(30) Priority: 21.09.2023 KR 20230126657; 21.09.2023 KR 20230126658; 26.09.2023 KR 20230129155; 22.02.2024 KR 20240026117; 13.09.2024 KR 20240125414
(71) Applicant: LG Electronics Inc., Yeongdeungpo-gu Seoul 07336 (KR)
(72) Inventor: PARK, Kyungho, Seoul 08592 (KR); KIM, Eui Sung, Seoul 08592 (KR); MOON, Hyunwook, Seoul 08592 (KR)
(74) Representative: Vossius & Partner Patentanwälte Rechtsanwälte mbB
(86) International application number: PCT/KR2024/014234
(87) International publication number: WO 2025/063762

(57) **Abstract**

A coil assembly is disclosed. The coil assembly comprises a plurality of heating portions disposed on a substrate. The plurality of heating portions are formed in a rotating pattern and electrically connected to each other through at least two layers. The pattern of the plurality of heating portions forms a plurality of spirals in one layer, inter-spiral regions are formed between the plurality of spirals, and at least one sensing coil is disposed in the inter-spiral regions of the other layer. Accordingly, a space for a plurality of sensing coils and a temperature sensor may be ensured.

## Description

### TECHNICAL FIELD

The present disclosure relates to a cooking appliance, and more particularly, to a coil assembly included in an induction heating cooktop.

### BACKGROUND ART

Recently, an induction range using induction heating technology is attracting attention as a next-generation cooking appliance that may replace a gas range due to advantages such as high heating efficiency, fast heating speed, stability, convenience, etc.

An induction heating cooktop product includes an induction heating cooktop having a heating coil composed of a ritz wiring. When an induction-compatible vessel is located at a predetermined burner position, the cooking vessel is heated. This scheme has a disadvantage in that the cooking vessel should be placed only at a predetermined position, and has a disadvantage in that heating efficiency decreases when the position of the cooking vessel is slightly incorrect.

Accordingly, all-free induction heating technology is being developed. This is a technology capable of heating the induction-compatible vessel even when the induction-compatible vessel is positioned not only at a predetermined area of an induction heating top plate but also at various positions thereof, and has the advantage that various sized vessels and a multiple-compartment vessel having three or more compartments may also be heated.

### SUMMARY OF DISCLOSURE

### TECHNICAL PURPOSE

A technical purpose of the present disclosure is to provide a coil assembly that secures a space for a plurality of sensing coils and a plurality of temperature sensors.

A technical purpose of the present disclosure is to provide a coil assembly in which wirings of a plurality of heating coils are optimally arranged.

A technical purpose of the present disclosure is to provide a coil assembly in which magnetic field directions of magnetic fields respectively generated from a plurality of heating coils are opposite to each other such that the magnetic fields cancel each other.

A technical purpose of the present disclosure is to provide a coil assembly in which the magnetic fields cancelling each other cause the eddy currents flowing in the cooking vessel to superimpose each other, thereby increasing the heating performance and efficiency of the cooking appliance.

A technical purpose of the present disclosure is to provide a coil assembly in which a plurality of heating coils, a plurality of sensing coils, and a plurality of temperature sensors are formed into an integral PCB pattern assembly, thereby contributing to process simplification.

The purposes to be achieved according to an embodiment of the present specification are not limited to the above-mentioned purposes, and other purposes not mentioned will be clearly understood by those skilled in the art from the following description.

### TECHNICAL SOLUTION

A coil assembly according to an embodiment of the present disclosure secures a space for a plurality of sensing coils. Specifically, the coil assembly includes a plurality of heating units disposed on a substrate, a pattern of each of the plurality of heating units winds a plurality of turns in one layer, an inter-turn area is formed between adjacent ones of the plurality of turns, and at least one sensing coil is disposed in a further layer and in an area overlapping the inter-turn area.

In the coil assembly according to an embodiment of the present disclosure, wirings of a plurality of heating coils are optimally arranged. Specifically, in the coil assembly, wirings connecting the heating coil to the heating coil terminal or connecting the heating coils to each other are formed in the layer in which the sensing coil is formed.

The coil assembly according to an embodiment of the present disclosure secures a space for a plurality of sensing coils and a plurality of temperature sensors. Specifically, the spacing in the area overlapping the center of the sensing coil among the spacings between the patterns of the heating coil is greater than the spacing in the area that does not overlap the center of the sensing coil among the spacings between the patterns of the heating coil.

In the coil assembly according to an embodiment of the present disclosure, wirings of a plurality of heating coils are optimally arranged. Specifically, the inner terminals of the heating coils are connected in series to each other via a wiring extending across the heating coils and positioned at positions corresponding to the centers thereof.

In the coil assembly according to an embodiment of the present disclosure, the magnetic field directions of magnetic fields respectively generated from a plurality of heating coils are opposite to each other such that the magnetic fields cancel each other. Specifically, the heating coils connected in series to each other are respectively formed in the patterns such that the directions in which the current flows therein, respectively are opposite to each other. The first heating coil is formed in a pattern in which a current flows therein from the outer area to the center of the inner area in a clockwise direction, and the second heating coil is formed in a pattern in which a current flow therein from the center of the inner area to the outer area in a counterclockwise direction.

In the coil assembly according to an embodiment of the present disclosure, the magnetic fields cancelling each other cause the eddy currents flowing in the cooking vessel to superimpose each other, thereby increasing the heating performance and efficiency of the cooking appliance. Specifically, the heating coils connected in series with each other are respectively formed in the patterns such that the directions in which the current flows therein, respectively are opposite to each other, the heating coils adjacent to each other in the front-rear direction are respectively formed in the patterns such that the directions in which the current flows therein, respectively are opposite to each other, and/or the heating coils adjacent to each other in the left-right direction are respectively formed in the patterns such that the directions in which the current flows therein, respectively are opposite to each other.

In the coil assembly according to an embodiment of the present disclosure, a plurality of heating coils, a plurality of sensing coils, and a plurality of temperature sensors are formed into an integral PCB pattern assembly, thereby contributing to simplification of the process. Specifically, a temperature sensor is disposed in the center of each of the plurality of sensing coils, and a plurality of heating coil terminals connected to the plurality of heating coils, and a connector connected to a plurality of sensing coils and the temperature sensor are disposed in one side in the front-rear direction of the PCB pattern assembly.

### TECHNICAL EFFECT

As described above, in accordance with the present disclosure, a pattern of each of the plurality of heating units winds a plurality of turns in one layer, an inter-turn area is formed between adjacent ones of the plurality of turns, and at least one sensing coil is disposed in a further layer and in an area overlapping the inter-turn area, thereby securing a space for the plurality of sensing coils.

In the coil assembly according to the present disclosure, the wirings for connecting the heating coil to the terminal or for connecting the heating coils to each other are formed in the layer in which the sensing coil is formed, and thus the wiring of the plurality of heating coils may be optimally arranged.

According to the present disclosure, the spacing in the area overlapping the center of the sensing coil among the spacings between the patterns of the heating coil is greater than the spacing in the area that does not overlap the center of the sensing coil among the spacings between the patterns of the heating coil, thereby securing a space for the plurality of sensing coils and the plurality of temperature sensors.

According to the present disclosure, the spacing between the heating coils may be greater than a diameter of a space formed in the center of the sensing coil, such that a space for the plurality of sensing coils and a plurality of temperature sensors may be secured.

According to the present disclosure, the heating coils may be connected in series to each other via the wiring extending across the heating coils and positioned at positions corresponding to the centers thereof, such that the wirings of the plurality of heating coils may be optimally arranged.

According to the present disclosure, the heating coils connected in series to each other are respectively formed in the patterns such that the directions in which the current flows therein, respectively are opposite to each other. Thus, the magnetic field directions of magnetic fields respectively generated from a plurality of heating coils are opposite to each other such that the magnetic fields cancel each other.

According to the present disclosure, the heating coils connected in series with each other are respectively formed in the patterns such that the directions in which the current flows therein, respectively are opposite to each other, the heating coils adjacent to each other in the front-rear direction are respectively formed in the patterns such that the directions in which the current flows therein, respectively are opposite to each other, and/or the heating coils adjacent to each other in the left-right direction are respectively formed in the patterns such that the directions in which the current flows therein, respectively are opposite to each other. Thus, the magnetic field directions of magnetic fields respectively generated from a plurality of heating coils are opposite to each other such that the magnetic fields cancel each other. Thus, the magnetic fields cancelling each other cause the eddy currents flowing in the cooking vessel to superimpose each other, thereby increasing the heating performance and efficiency of the cooking appliance.

According to the present disclosure, the temperature sensor is respectively disposed in the center of each of a plurality of sensing coils, and the plurality of heating coil terminals connected to the plurality of heating coils, and the connector connected to the plurality of sensing coils and the temperature sensor are disposed in one side in the front-rear direction of an PCB pattern assembly, such that a space for the plurality of sensing coils and the plurality of temperature sensors may be secured, and the wirings of the plurality of heating coils, the plurality of sensing coils, and the wirings of the temperature sensor may be optimally arranged.

In addition, according to the present disclosure, the plurality of heating coils, the plurality of sensing coils, and the plurality of temperature sensors may be formed into the integral PCB pattern assembly, thereby contributing to the simplification of processes such as masking, printing, etching, etc.

In addition, according to the present disclosure, the heating coils connected in series to each other may be connected to each other via the wiring extending across the heating coils and positioned at the positions overlapping the centers thereof, such that the optimal wiring route may be implemented.

In addition, according to the present disclosure, the heating coil terminals respectively connected to the heating coils connected in series with each other may be disposed in one side in the front-rear direction of the PCB pattern assembly, thereby securing a space in which the wiring of the plurality of sensing coils and the wirings of the plurality of temperature sensors are disposed.

In addition to the above-described effects, specific effects of the present disclosure will be described together while describing the specific matters for implementing the present disclosure.

### BRIEF DESCRIPTION OF DRAWINGS

FIG. 1 is an exploded perspective view illustrating an exploded state of a cooktop in a cooking appliance according to an embodiment of the present disclosure.
FIG. 2 is a plan view of the cooktop shown in FIG. 1 and a diagram showing the configuration of the PCB pattern coil assembly.
FIG. 3 is a diagram illustrating a connection structure between heating coils connected in series with each other in a coil assembly according to an embodiment of the present disclosure.
FIG. 4 is a diagram illustrating a spacing between patterns of a heating coil in a coil assembly according to an embodiment of the present disclosure.
FIG. 5 is a diagram showing a spacing between heating coils in a coil assembly according to an embodiment of the present disclosure.
FIG. 6 is a diagram illustrating a connection structure between heating coils connected in series and in parallel with each other in a coil assembly according to an embodiment of the present disclosure.
FIG. 7 is a circuit diagram illustrating a connection relationship between heating coils connected in series and in parallel with an inverter circuit in a cooking appliance according to an embodiment of the present disclosure.

### DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used to distinguish only one component from another component. Unless otherwise stated, the first component may be the second component.

The present disclosure is not limited to the embodiments disclosed below, but various changes may be applied thereto and the present disclosure may be implemented in various different forms. However, the present embodiment is provided so that the present disclosure is complete and the scope of the present disclosure is fully informed to those skilled in the art. Therefore, the present disclosure is not limited to the embodiments disclosed below, but it should be understood that a configuration of one embodiment and a configuration of another embodiment are substituted with each other or are added to each other, and all changes, equivalents, and substitutes included in the technical spirit and scope of the present disclosure are included in the present disclosure.

The accompanying drawings are only set forth for easy understanding of the embodiments disclosed in the present disclosure, and the technical spirit disclosed in the present disclosure is not limited by the accompanying drawings, and it should be understood that all changes, equivalents, and substitutes included in the spirit and technical scope of the present disclosure are included in the present disclosure. In the drawings, the components may be expressed to be larger or smaller in size or thickness in consideration of convenience of understanding, etc. However, the scope of the present disclosure should not be limited thereto.

The terms used herein are used only to describe specific embodiments or embodiments, and are not intended to limit the present disclosure. As used herein, the singular constitutes "a" and "an" are intended to include the plural constitutes as well, unless the context clearly indicates otherwise In the present disclosure, terms such as "include" and "comprise" are intended to designate that a feature, a number, a step, an operation, a component, a part, or a combination thereof as described in the present disclosure exist. That is, it should be understood that in the present disclosure, the terms such as "include" and "comprise" do not exclude the presence or addition of one or more other features, numbers, steps, operations, components, parts, or combinations thereof.

Terms including ordinals, such as first, second, etc., may be used to describe various components, but the components are not limited by the terms. The terms are used only for the purpose of distinguishing one component from another component.

When it is mentioned that one component is "connected" or "coupled" to another component, it should be understood that one component may be directly connected or coupled to another component, or still another component may be present therebetween. On the other hand, when it is mentioned that one component is "directly connected" or "directly coupled" to another component, it should be understood that still another component is absent therebetween.

When one component is referred to as "being disposed on top of" or "being disposed under" another component, it should be understood that one component may be directly disposed on top of or under another component or still another component may be present therebetween.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a coil assembly and a cooking appliance including the same are disclosed.

Herein, in a state in which the cooking appliance is placed on the floor, a direction toward the front and rear sides around a center of the cooking appliance may be defined as a front-rear direction. A direction orthogonal to the front-rear direction of the cooking appliance may be defined as a left-right direction.

### [Overall Structure of Induction Heating Cooktop]

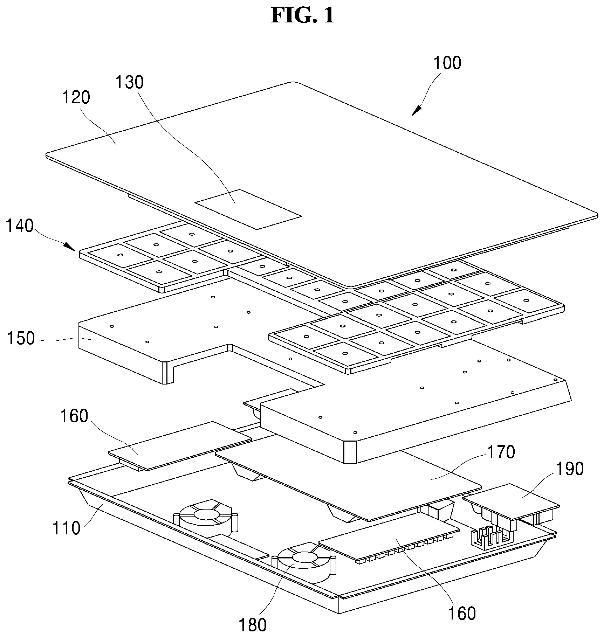

FIG. 1 is an exploded perspective view illustrating an exploded state of an induction heating cooktop 100 in a cooking appliance according to an embodiment of the present disclosure.

The cooking appliance according to an embodiment of the present disclosure may be an oven range type cooking appliance in which the cooktop 100 is disposed in an upper area and an oven is disposed in a lower area. The present disclosure is not limited thereto, and the cooking appliance according to an embodiment of the present disclosure may be embodied as a cooking appliance in which the cooktop 100 is provided alone.

Referring to FIG. 1, the cooking appliance according to an embodiment of the present disclosure includes the induction heating cooktop 100. The induction heating cooktop 100 may include a casing 110 and a top plate 120.

According to the present embodiment, an exterior of the cooktop 100 may be defined by the casing 110 and the top plate 120. The casing 110 may be disposed under the top plate 120, and may constitute a front surface, a rear surface, a side surface, and a bottom surface of the cooktop 100. The top plate 120 may be disposed at a top of the cooktop 100 and may constitute an outer appearance of an upper surface of the cooktop 100. The top plate 120 may be made of ceramic glass for mounting a cooking vessel thereon.

An accommodation space may be formed inside the casing 110. The accommodation space formed inside the casing 110 may be opened upwardly. In an example, the casing 110 may be formed in a hexahedral shape with an open upper side. In the accommodation space surrounded with the top plate 120 and the casing 110, various internal components constituting the cooktop 100 may be accommodated.

In addition, an integrated PCB pattern coil assembly 140 may be disposed under the top plate 120 in the cooktop 100. In the PCB pattern coil assembly 140, at least one heating coil for heating the cooking vessel via induction heating and at least one sensing coil for sensing the cooking vessel may be integrally formed with each other.

In one example, the PCB pattern coil assembly 140 may include a plurality of PCB pattern coil assemblies according to a size of the top plate 120 of the cooktop 100. In one example, when the top plate 120 is divided into three areas including a left area, a central area, and a right area, three PCB pattern coil assemblies 140 may be respectively disposed under the corresponding areas. The PCB pattern coil assemblies 140 may be formed in different sizes to be suitable for the sizes of the left area, the central area, and the right area, respectively. Each of the PCB pattern coil assemblies 140 corresponding to each area may independently operate.

In the PCB pattern coil assembly 140, the heating coil for induction heating, the sensing coil for sensing the cooking vessel, a temperature sensor for sensing a temperature, a terminal for connection thereof with other components, etc. may be integrally formed with each other. The PCB pattern coil assembly 140 may be divided into a plurality of unit blocks. In an example, one heating coil may be disposed in one unit block. In an example, at least two sensing coils may be disposed in one unit block. In an example, two sensing coils may be disposed between adjacent unit blocks.

In addition, in the cooktop 100, a supporter 150 may be disposed under the PCB pattern coil assembly 140. The supporter 150 may constitute a skeleton inside the cooktop 100 so as to support various internal components constituting the cooktop 100. In an example, the supporter 150 may be formed in a hexahedral shape with an open lower side. In one example, the supporter 150 may be formed in a shape substantially identical with a shape obtained by turning the casing 110 upside down, and may be formed to have a slightly smaller size than that of the casing 110.

According to the present embodiment, the accommodation space may be formed inside the supporter 150, and may be formed as a space surrounded by the bottom portion of the casing 110 and the supporter 150. Various internal components constituting the cooktop 100 may be accommodated in the supporter 150.

In one example, a resonant PCB assembly 160 in which capacitors used for resonance or oscillation are mounted, an inverter PCB assembly 170 in which a switching element for applying a current to the heating coil for induction heating, etc. are mounted, a fan 180 for cooling down the internal components, an EMI filter 190 for filtering and blocking various noises mixed with each other on electrical power, and a control PCB assembly in which a controller for controlling the overall operation of the cooktop 100 and circuits for sensing the cooking vessel are mounted may be accommodated in the supporter 190.

According to the present embodiment, the supporter 150 may also provide a base function for the PCB pattern coil assembly 140. More specifically, a ferrite core may be installed on an upper surface of the supporter 150, the PCB pattern coil assembly 140 may be installed on top of the ferrite core, and the top plate 120 may be installed on top of the PCB pattern coil assembly 140.

In addition, the cooktop 100 may include a control panel 130. The control panel 130 may be disposed on one area of an upper surface of the top plate 120. The control panel 130 may include a UI (user interface) including an adjustment icon for adjusting an operation of the cooktop 100 in a touch manner and a display for displaying an operation state of the cooktop 100.

### [PCB Pattern Coil Assembly]

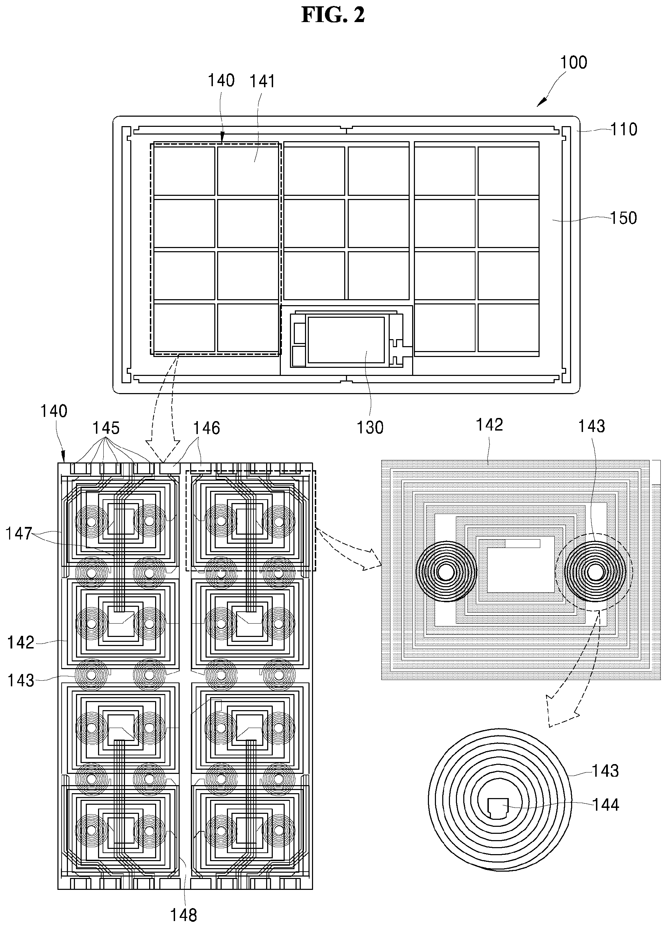

FIG. 2 is a plan view of the cooktop 100 illustrated in FIG. 1 and a diagram illustrating a configuration of the PCB pattern coil assembly 140.

Referring to FIG. 2, the cooktop 100 may include the casing 110, the supporter 150, and the PCB pattern coil assembly 140. The PCB pattern coil assembly 140 may be provided to constitute a heating coil 142 for induction heating of the cooktop 100 and a sensing coil 143 for sensing the cooking vessel, and may be disposed in an accommodation space inside the cooktop 100.

The supporter 150 may be disposed on top of the casing 110, the PCB pattern coil assembly 140 may be disposed on top of the supporter 150, and the top plate 120 may be disposed on top of the PCB pattern coil assembly 140.

The PCB pattern coil assembly 140 may include a plurality of PCB pattern coil assemblies according to the size and shape of the cooktop 100. In the present embodiment, it is illustrated that the cooktop 100 is divided into the left area, the central area, and the right area, and includes three PCB pattern coil assemblies 140 corresponding thereto. Each of the PCB pattern coil assemblies 140 may include a plurality of heating coils 142 and a plurality of sensing coils 143.

Each of the PCB pattern coil assemblies 140 may be divided into a plurality of unit blocks 141. The plurality of unit blocks 141 may be arranged in a matrix form. For example, at least one heating coil 142 may be disposed in one unit block 141. For example, at least two sensing coils 143 may be disposed in one unit block 141. In addition, at least two sensing coils 143 may be disposed between adjacent two unit blocks 141 and across the adjacent two unit blocks 141.

Each of the heating coil 142 and the sensing coil 143 formed in the PCB pattern coil assembly 140 may be disposed in a pattern form on a board. In an example, the heating coil 142 may be formed in a polygonal, for example, a square, a rectangular, or a hexagonal pattern. Alternatively, the heating coil 142 may be formed in an annular pattern. For example, the sensing coil 143 may be formed in a circular pattern. Alternatively, the sensing coil 143 may be formed in a circular, square, rectangular, or hexagonal pattern.

In addition, at least one heating coil terminal 145, at least one connector 146, at least one heating coil wiring 147, at least one sensing wiring 148, and at least one via may be formed in the PCB pattern coil assembly 140. The heating coil terminal 145 is electrically connected to the heating coil 142 via the heating coil wiring 147, and is electrically connected to the resonant PCB assembly 160 and the inverter PCB assembly 170. The connector 146 is electrically connected to the sensing coil 143 via the sensing wiring 148, and is electrically connected to the resonant PCB assembly 160 and the control PCB assembly.

As described above, not only the heating coil 142 but also the sensing coil 143 may be formed in the unit block 141 of the PCB pattern coil assembly 140. In the unit block 141, a plurality of sensing coils 143 are arranged along a front-rear direction, and a plurality of sensing coils 143 are also arranged in a left-right direction.

The PCB pattern coil assembly 140 may include a PCB (hereinafter, referred to as a "heating coil PCB") on which the heating coil 142 is patterned and a PCB (hereinafter, referred to as a "sensing coil PCB") on which the sensing coil 143 is patterned. The PCB pattern coil assembly 140 may be formed in a form in which the heating coil PCB and the sensing coil PCB are stacked in an up-down direction. In one example, the heating coil PCB may be formed in a form in which 10 to 12 layers are stacked, and the heating coils 142 of the layers may be electrically connected to each other via the via. In one example, the sensing coil PCB may be formed in a form in which two layers are stacked, and the sensing coils 143 of the layers may be electrically connected to each other via the via.

In addition, at least one of the heating coil PCB and the sensing coil PCB may be provided in a form in which the coil is patterned on each of both opposite surfaces of the board. In the present embodiment, it is illustrated that the heating coil 142 is patterned on each of both opposing surfaces of the heating coil PCB, and the sensing coil 143 is patterned on each of both opposing surfaces of the sensing coil PCB.

Each of the sensing coils 143 may be disposed to overlap an area where each of the heating coils 142 is formed. In addition, each of the sensing coils 143 may be disposed to overlap an area between two adjacent areas where the two heating coils 142 are formed, respectively.

In the present embodiment, it is illustrated that two sensing coils 143 are disposed in the area where each heating coil 142 is formed, and two sensing coils 143 are disposed between the two heating coils 142 adjacent to each other in the front-rear direction. In addition, a temperature sensor 144 may be provided in the PCB pattern coil assembly 140. In one example, the temperature sensor 144 may be disposed in a center portion of an area of each sensing coil 143.

In an example, the PCB pattern coil assembly 140 may be provided in a form in which the heating coil 142, the sensing coil 143, and the temperature sensor 144 are integrally formed with each other. For example, the PCB pattern coil assembly 140 may be formed in a form in which the heating coil PCB having the heating coil 142 and the sensing coil PCB having the sensing coil 143 and the temperature sensor 144 are stacked. The PCB pattern coil assembly 140 may be provided in a form including one or more pattern coil PCBs.

As described above, the PCB pattern coil assembly 140 has a structure in which a plurality of heating coils 142 for induction heating and a plurality of sensing coils 143 for sensing the cooking container mounted on the ceramic glass are integrally formed with each other using the patterns printed on the PCB. The number of heating coils 142 and sensing coils 143 may be determined based on the size of the cooktop 100.

For example, the integrated PCB pattern coil assembly 140 may include heating coil patterns vertically arranged in 10 layered structures, sensing coil patterns vertically arranged in two layered structures, and insulating materials disposed between the heating coil patterns and between the sensing coil patterns and between the heating coil pattern and the sensing coil pattern to insulate them from each other. The insulating material may be formed by curing a prepreg composed of a thermosetting resin and glass fiber which is generally used to form a printed circuit board. In an example, an epoxy resin-based thermosetting resin is preferably applicable as the thermosetting resin , and specifically, FR-4 may be applied as the prepreg.

As described above, the insulating material formed using the prepreg may be disposed between the heating coil patterns vertically arranged in the layered structures to insulate them from each other, and may be disposed between the sensing coil patterns vertically arranged in the layered structures to insulate them from each other. In addition, the insulating material may be constructed to fill an area in which the pattern such as the heating coil pattern and the sensing coil pattern is not formed, and may serve to form a layered structure of an individual layer.

Therefore, based on the heating coil pattern and the sensing coil pattern, the PCB pattern coil assembly 140 may have a total of 12 layers from a first layer as the uppermost layer to a twelfth layer as the lowermost layer arranged in the vertical direction.

As described above, the heating coil pattern and the sensing coil pattern according to the embodiment of the present disclosure are formed into the integral PCB pattern coil assembly composed of a plurality of layers, thereby contributing to the simplification of processes such as masking, printing, and etching.

### [Connection Structure between Heating Coils of PCB Pattern Coil Assembly]

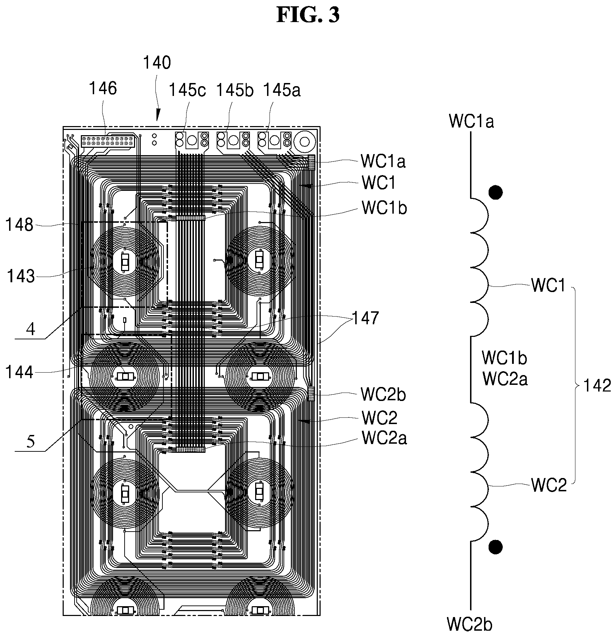

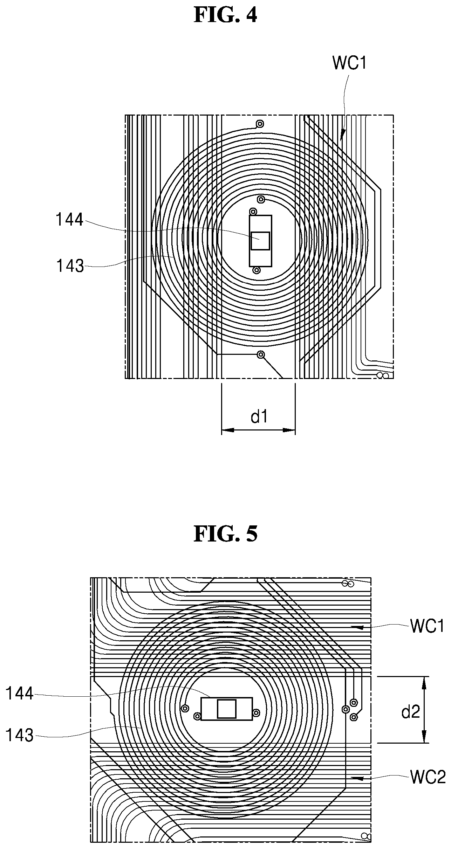

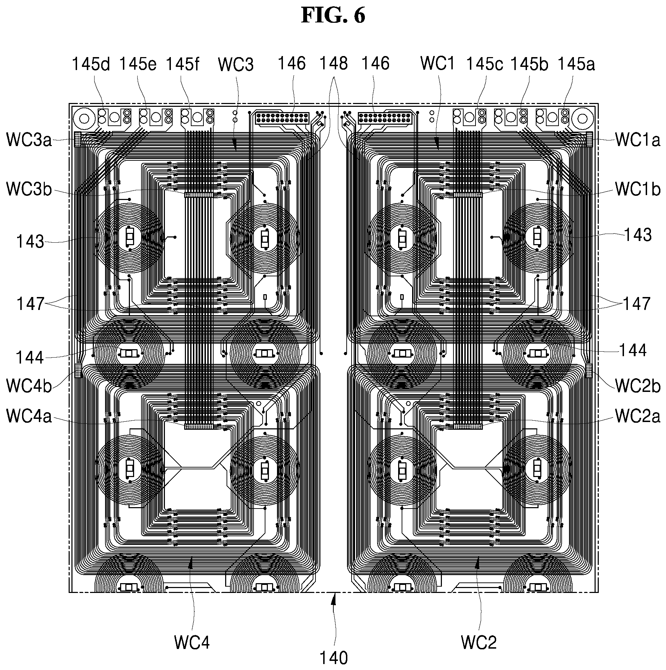

FIG. 3 is a diagram illustrating a connection structure between heating coils connected in series with each other in a coil assembly according to an embodiment of the present disclosure. FIG. 4 is a diagram showing a spacing between patterns of a heating coil in a coil assembly according to an embodiment of the present disclosure. FIG. 5 is a diagram showing a spacing between heating coils in a coil assembly according to an embodiment of the present disclosure. FIG. 6 is a diagram illustrating a connection structure between heating coils connected in series and in parallel with each other in a coil assembly according to an embodiment of the present disclosure.

Referring to FIG. 3 to FIG. 6, a coil assembly according to an embodiment of the present disclosure includes a substrate and a plurality of heating units disposed on the substrate. The coil assembly may be referred to as the PCB pattern coil assembly 140, and the heating unit may be referred to as a heating coil 142.

A plurality of heating coils 142 are formed in a winding pattern and are electrically connected to each other via at least two layers. The pattern of the plurality of heating coils 142 is constructed such that a plurality of turns is disposed in one layer, an inter-turn area is formed between adjacent ones of the plurality of turns, and at least one sensing coil 143 is disposed in another layer and in an area corresponding to the inter-turn area.

A central area without a pattern is formed in the center of the plurality of heating coils 142. An inter-turn area formed in an area in each of both opposing sides around the central area of the pattern of each of the plurality of heating coils 142 has a width greater than a width of the inter-turn area between the turns of the heating coil 142 in the area different from the area in each of both opposing sides. The sensing coil 143 is disposed in another layer and in an area corresponding to the inter-turn area formed in the area in each of both opposing sides around the central area of the plurality of heating coils 142.

The sensing coil 143 is formed in a winding pattern. The sensing coils are disposed to be spaced apart from each other by a predetermined distance. In one example, the heating coil 142 and the sensing coil 143 may be formed on the same substrate. In another example, the heating coil 142 and the sensing coil 143 may be formed on different substrates. The substrate on which the heating coil 142 is formed and the substrate on which the sensing coil 143 is formed may be electrically connected to each other via a terminal.

A non-pattern area may be formed in one heating unit area of the plurality of heating coils 142. A non-pattern area may be formed in a boundary area between adjacent ones of the plurality of heating units.

A central portion of the sensing coil 143 may be disposed in the non-pattern area in the area of the heating coil 142, wherein the sensing coil 143 and the heating coil 142 may partially overlap each other. The sensing coil 143 may not be disposed in a left-right boundary area of a boundary area between the heating coils. The central portion of the sensing coil 143 may be disposed in a front-rear boundary area of the boundary area between the heating units, wherein the sensing coil 143 and the heating unit may partially overlap each other.

The central portions of at least four and at most six sensing coils 143 may be disposed in the non-pattern areas of the two heating units arranged side by side in the left-right or front-rear direction among the plurality of heating units. In this regard, the sensing coil 143 may not be disposed in the boundary area between the heating units arranged side by side in the left-right direction.

When four heating units are arranged in series or in parallel with each other, the central portions of at least 12 and at most 14 sensing coils 143 may be disposed in the non-pattern areas of the heating unit areas. In this regard, the sensing coil 143 may not be disposed in a boundary area between the heating units arranged side by side in the left-right directions.

The heating unit may include a first heating coil WC1 and a second heating coil WC2 disposed adjacent to each other in the front-rear direction, and a third heating coil WC3 and a fourth heating coil WC4 respectively disposed adjacent to the first heating coil WC1 and the second heating coil WC2 in the left-right direction.

Two sensing coils may be disposed in an area of each of the first heating coil WC1 and the second heating coil WC2. Two sensing coils may be disposed in a boundary area between the first heating coil WC1 and the second heating coil WC2.

Two sensing coils may be disposed in an area of each of the third heating coil WC3 and the fourth heating coil WC4. Two sensing coils may be disposed in a boundary area between the third heating coil WC3 and the fourth heating coil WC4. The sensing coil may not be disposed in a boundary area between the first heating coil WC1 and the second heating coil WC2 and in a boundary area between the third heating coil WC3 and the fourth heating coil WC4.

The sensing coils 143 may be disposed in at least two layers and may be electrically connected to each other. A plurality of sensing coils may be disposed in one layer. At least one of the plurality of sensing coils 143, a plurality of heating coil wirings 147, and a plurality of sensing coil wirings 148 may be disposed in another layer or the other layer.

At least one sensing coil 143 may be disposed in each of the non-pattern area in the heating unit area and the non-pattern area in the boundary area between the heating units.

Each of the plurality of heating units includes the first heating coil WC1 and the second heating coil WC2. Two sensing coils 143 are disposed in another layer and in the areas overlapping the non-pattern areas of the first heating coil WC1 and the second heating coil WC2. In addition, two sensing coils 143 are disposed in another layer and in the area overlapping the boundary area between the first heating coil WC1 and the second heating coil WC2. In addition, the temperature sensor 144 is further disposed in the center of each sensing coil 143.

The first heating coil WC1 and the second heating coil WC2 are connected in series to each other via a wiring. The first heating coil WC1 includes a first outer terminal WC1a and a first inner terminal WC1b, and is formed in a pattern in which it winds in a clockwise manner from the first outer terminal WC1a toward the first inner terminal WC1b. The second heating coil WC2 includes a second inner terminal WC2a and a second outer terminal WC2b, and is formed in a pattern in which it winds in a counterclockwise manner from the second inner terminal WC2a toward the second outer terminal WC2b.

A direction in which the current flows in the first heating coil WC1 and a direction in which the current flows in the second heating coil WC2 are opposite to each other. For example, a resonant current is applied to the first outer terminal WC 1a of the first heating coil WC 1, and a ground voltage is applied to the second outer terminal WC1b of the second heating coil WC 2. Thus, the directions of the currents respectively flowing in the first heating coil WC1 and the second heating coil WC2 connected in series with each other are opposite to each other.

The coil assembly further includes a first heating coil terminal 145a connected to the first outer terminal WC1a of the first heating coil WC1 via a first wiring, a second heating coil terminal 145b connected to the second outer terminal WC2b of the second heating coil WC2 via a second wiring, and a third heating coil terminal 145c connected to the first inner terminal WC1b of the first heating coil WC1 and the second inner terminal WC2a of the second heating coil WC2 via a third wiring.

The first wiring, the second wiring, and the third wiring may act as the heating coil wirings 147, and may be formed in a layer in which the sensing coil 143 is formed. The third wiring may refer to a wiring connecting the first heating coil WC1 and the second heating coil WC2 in series to each other, and may be formed in a layer in which the sensing coil 143 is formed and may extend across the first heating coil WC1 and the second heating coil WC2 and be positioned at positions overlapping the centers thereof. The third heating coil terminal 145c may be connected to another heating coil in the coil assembly via a relay. In addition, the coil assembly further includes the connector 146 connected to at least one sensing coil 143 via the sensing coil wiring 148. In addition, the connector 146 is connected to the temperature sensor 144 via the sensing coil wiring.

In the cooking appliance according to an embodiment, the PCB pattern coil assembly 140 includes the first heating coil WC1 and the second heating coil WC2. In addition, the PCB pattern coil assembly 140 includes a first heating coil terminal 145a, a second heating coil terminal 145b, and a third heating coil terminal 145c which are connected to the first heating coil WC1 and the second heating coil WC2. In addition, the PCB pattern coil assembly 140 includes the plurality of sensing coils 143, the plurality of temperature sensors 144, and the connector 146.

The first heating coil WC1 is formed in a pattern in which it winds from an outer terminal WC1a toward an inner terminal WC1b in a clockwise direction. The outer terminal WC1a of the first heating coil WC1 is connected to the first heating coil terminal 145a via a wiring. A current is applied to the first heating coil terminal 145a. The current applied to the first heating coil terminal 145a flows in a clockwise direction along the pattern in the form of the first heating coil WC1.

The second heating coil WC2 is formed in a pattern in which it winds from an inner terminal WC2a toward an outer terminal WC2b in a counterclockwise direction. The outer terminal WC2b of the second heating coil WC2 is connected to the second heating coil terminal 145b via a wiring. A ground voltage is applied to the second heating coil terminal 145b. The second heating coil WC2 is connected in series to the first heating coil WC1 and receives the current transferred thereto via the first heating coil WC1. The current of the second heating coil WC2 flows in a counterclockwise manner along the pattern of the second heating coil WC2.

The first heating coil WC1 and the second heating coil WC2 are connected in series with each other. In one example, the first heating coil WC1 and the second heating coil WC2 are connected in series with each other via a wiring extending across the first heating coil WC1 and the second heating coil WC2 and positioned at a central line thereof. The inner terminal WC1b of the first heating coil WC1 and the inner terminal WC2a of the second heating coil WC2 are connected to the third heating coil terminal 145c via a wiring extending across the first heating coil WC1 and the second heating coil WC2 and positioned at a central line thereof.

Among spacings between the patterns of the first heating coil WC1, a spacing in an area overlapping the center of the sensing coil 143 may be a first distance d1 greater than a spacing in an area non-overlapping the center of the sensing coil 143.

In addition, a spacing between the first heating coil WC1 and the second heating coil WC2 may be a second distance d2 greater than a diameter of a space formed in the center of the sensing coil 143.

The first distance d1 and the second distance d2 may be set to be equal to each other. For example, each of the spacing d1 in the area overlapping the center of the sensing coil 143 among the spacings between the patterns of the first heating coil WC1 or the second heating coil WC2, and the spacing d2 between the first heating coil WC1 and the second heating coil WC2 may be sized to be larger than the diameter of the space formed in the center of the sensing coil 143. The first distance d1 and the second distance d2 may be set to be equal to each other.

The first heating coil terminal 145a, the second heating coil terminal 145b, and the third heating coil terminal 145c are disposed at one side of the PCB pattern coil assembly 140. For example, the third heating coil terminal 145c is disposed at one side in the front-rear direction of the PCB pattern coil assembly 140, and the first heating coil terminal 145a and the second heating coil terminal 145b are disposed at the right side around the third heating coil terminal 145c.

In addition, the connector 146 is disposed at one side in the front-rear direction of the PCB pattern coil assembly 140 as the first heating coil terminal 145a, the second heating coil terminal 145b, and the third heating coil terminal 145c are. The connector 146 is disposed at the left side around the third heating coil terminal 145c. Alternatively, the first heating coil terminal 145a and the second heating coil terminal 145b may be disposed at the left side around the third heating coil terminal 145c, and the connector 146 may be disposed at the right side around the third heating coil terminal 145c.

The first heating coil terminal 145a is connected to an output terminal of an inverter circuit provided in the inverter PCB assembly 170. A first resonant capacitor may be further connected to and disposed between the first heating coil terminal 145a and the output terminal of the inverter circuit.

The current applied from the inverter circuit resonates at a resonance frequency determined based on the first heating coil WC1 and the first resonant capacitor, and is supplied to the first heating coil WC1 via the first heating coil terminal 145a.

The current of the first heating coil WC1 flows in a clockwise manner along the pattern of the first heating coil WC1 turning from an outer area to a center of an inner area in the clockwise direction.

The second heating coil terminal 145b is connected to a ground voltage terminal. A second resonant capacitor may be further connected to and disposed between the second heating coil terminal 145b and the ground voltage terminal.

The first heating coil terminal 145a, the first heating coil WC1, the second heating coil WC1, and the second heating coil terminal 145b constitute a current path. The resonant current output from the inverter circuit flows through the first heating coil terminal 145a, the first heating coil WC1, the second heating coil WC1, and the second heating coil terminal 145b. In this regard, the current of the first heating coil WC1 flows in the clockwise direction, and the current of the second heating coil WC2 flows in the counterclockwise direction.

The patterns of the first heating coil WC1 and the second heating coil WC2 may be formed such that a direction in which the current flows in first heating coil WC1 and a direction in which the current flows in the second heating coil WC2 are opposite to each other, such that a magnetic field generated from the first heating coil WC1 and a magnetic field generated from the second heating coil WC2 cancel each other out. The first heating coil WC1 and the second heating coil WC2 may be connected in anti-series with each other such that the magnetic field generated from the first heating coil WC1 and the magnetic field generated from the second heating coil WC2 cancel each other out. The magnetic field generated from the first heating coil WC1 and the magnetic field generated from the second heating coil WC2 cancel each other out, thereby generating a magnetic field in the cooking vessel under the electromagnetic induction. The magnetic field generated under the electromagnetic induction causes the eddy currents flowing in the cooking vessel to superimpose each other, such that the superimposition of eddy currents in the cooking vessel increases the heating performance and efficiency of the cooking appliance.

The third heating coil terminal 145c is connected to the first heating coil WC1 and the second heating coil WC2 via a wiring extending across the first heating coil WC1 and the second heating coil WC2 and positioned at a central line thereof. The third heating coil terminal 145c is disposed at one side of the PCB pattern coil assembly 140 so as to be connected to the centers of the first heating coil WC1 and the second heating coil WC2.

The first heating coil terminal 145a and the second heating coil terminal 145b may be disposed at the right side around the third heating coil terminal 145c. Alternatively, the first heating coil terminal 145a and the second heating coil terminal 145b may be disposed at the left side around the third heating coil terminal 145c.

The connector 146 may be disposed at the left side around the third heating coil terminal 145c. Alternatively, the connector 146 may be disposed at the right side around the third heating coil terminal 145c. The connector 146 may have multiple connection ports. The plurality of temperature sensors 144 may be respectively connected to corresponding connection ports of the connector 146 via respective sensing wirings 148.

The outer terminal WC1a of the first heating coil WC1 is connected to the first heating coil terminal 145a, and the inner terminal WC1b of the first heating coil WC1 is connected to the third heating coil terminal 145c via the heating coil wiring 147 extending across the first heating coil WC1 and positioned at a central line thereof. Through this connection structure, the heating coil wiring connected to the first heating coil terminal 145a and the outer terminal WC1a of the first heating coil WC1 and the heating coil wiring connected to the second heating coil terminal 145b and the outer terminal WC2b of the second heating coil WC2 have an optimal arrangement structure.

The third heating coil terminal 145c is connected to the inner terminal of the first heating coil WC1 and the inner terminal of the second heating coil WC2 via the heating coil wiring 147 extending across the first heating coil WC1 and the second heating coil WC2 and positioned at a central line thereof, and is disposed in one side of the PCB pattern assembly 140. This connection and arrangement structure implements an optimal wiring route.

The first heating coil terminal 145a and the second heating coil terminal 145b are disposed at the left or right side around the third heating coil terminal 145c. This arrangement structure may secure a space for the wirings of the plurality of heating coils 142 and the wirings of the plurality of temperature sensors 144.

In addition, the first heating coil terminal 145a and the second heating coil terminal 145b connected to each of the first heating coil WC1 and the second heating coil WC2 connected in series with each other are disposed in the same side of the PCB pattern assembly 140, thereby securing a space in which the wirings of the plurality of heating coils 142 and the wirings of the plurality of temperature sensors 144 are disposed.

As shown in FIG. 6, the PCB pattern coil assembly 140 includes the first heating coil WC1, the second heating coil WC2, the third heating coil WC3, and the fourth heating coil WC4.

The first heating coil WC1 is connected to the first heating coil terminal 145a and is formed in a pattern in which it winds from the outer area toward the center of the inner area in a clockwise direction. The second heating coil WC2 is connected to the second heating coil terminal 145b, and is formed in a pattern in which it winds from the outer area toward the center of the inner area in a counterclockwise direction.

The third heating coil WC3 is connected to the fourth heating coil terminal 145d and is formed in a pattern in which it winds from the outer area toward the center of the inner area in a counterclockwise direction. The fourth heating coil WC4 is connected to the fifth heating coil terminal 145e and is formed in a pattern in which it winds from the outer area toward the center of the inner area in a clockwise direction.

Among the spacings between the patterns of each of the first to fourth heating coils WC1 to WC4, a spacing in an area overlapping the center of the sensing coil 143 may be the first distance d1 greater than a spacing in an area non-overlapping the center of the sensing coil 143.

Each of the spacing between the first and second heating coils WC1 and WC2 and the spacing between the third and fourth heating coils WC3 and WC4 may be the second distance d2 greater than the diameter of the space formed in the center of the sensing coil 143.

The first heating coil WC1 and the second heating coil WC2 are connected in series with each other, and the third heating coil WC3 and the fourth heating coil WC4 are connected in series with each other. The series of the first heating coil WC1 and the second heating coil WC2 connected in series with each other, and the series of the third heating coil WC3 and the fourth heating coil WC4 connected in series are connected in parallel to each other.

In one example, the inner terminal WC1b of the first heating coil WC1 and the inner terminal WC2a of the second heating coil WC2 are connected in series with each other via a heating coil wiring extending across the first heating coil WC1 and the second heating coil WC2 and .

The inner terminal WC3b of the third heating coil WC3 and the inner terminal WC4a of the fourth heating coil WC4 are connected in series with each other via a heating coil wiring extending across the center of the third heating coil WC3 and the fourth heating coil WC4 and positioned at a central line thereof.

The first heating coil WC1 and the third heating coil WC3 are connected to the output terminal of the inverter circuit via the first heating coil terminal 145a and the fourth heating coil terminal 145d. The second heating coil WC2 and the fourth heating coil WC4 are connected to the ground voltage terminal via the second heating coil terminal 145b and the fifth heating coil terminal 145e.

The first heating coil WC1 receives the current supplied from the inverter circuit via the first heating coil terminal 145a. In this regard, the current of the first heating coil WC1 flows in a clockwise direction along the heating coil pattern turning from the outer area to the center of the inner area in a clockwise direction.

The second heating coil WC2 receives the current supplied from the first heating coil WC1 via the inner terminal. In this regard, the current of the second heating coil WC2 flows in the counterclockwise direction along the heating coil pattern turning from the center of the inner area to the outer area in the counterclockwise direction.

The third heating coil WC3 receives the current supplied from the inverter circuit 320 via the fourth heating coil terminal 145d. In this regard, the current of the third heating coil WC3 flows in the counterclockwise direction along the heating coil pattern turning from the outer area toward the center of the inner area in the counterclockwise direction.

The fourth heating coil WC4 receives the current supplied from the third heating coil WC3 via the inner terminal. In this regard, the current of the fourth heating coil WC4 flows in a clockwise direction along the heating coil pattern turning in a clockwise manner from the center of the inner area toward the outer area.

As described above, the current flows in the first heating coil WC1 in the direction opposite to the direction in which the current flows in the second heating coil WC2 adjacent thereto in the front-rear direction and in the direction opposite to the direction in which the current flows in the third heating coil WC3 adjacent thereof in the left-right direction. In addition, the current flows in the fourth heating coil WC4 in the direction opposite to the direction in which the current flows in the third heating coil WC3 adjacent thereto in the front-rear direction and in the direction opposite to the direction in which the current flows in the second heating coil WC2 adjacent thereto in the left-right direction.

In addition, the first heating coil WC1 and the second heating coil WC2 are connected in anti-series with each other. The third heating coil WC3 and the fourth heating coil WC4 are connected in anti-series with each other.

In addition, the PCB pattern coil assembly 140 includes the first heating coil terminal 145a, the second heating coil terminal 145b, the third heating coil terminal 145c, a fourth heating coil terminal 145d, a fifth heating coil terminal 145e, and a sixth heating coil terminal 145f. In addition, the PCB pattern coil assembly 140 further includes the plurality of sensing coils 143, the plurality of temperature sensors 144, and the connector 146.

The first heating coil terminal 145a, the second heating coil terminal 145b, the third heating coil terminal 145c, the fourth heating coil terminal 145d, the fifth heating coil terminal 145e, the sixth heating coil terminal 145f, and the connector 146 are disposed in one side of the PCB pattern coil assembly 140.

In one example, the first heating coil terminal 145a and the second heating coil terminal 145b are disposed at the right side around the third heating coil terminal 145c, and the connector 146 is disposed at the left side around the third heating coil terminal 145c. The fourth heating coil terminal 145d and the fifth heating coil terminal 145e are disposed at the left side around the sixth heating coil terminal 145f, and the connector 146 is disposed at the right side around the sixth heating coil terminal 145f.

### [Connection Relationship between Inverter Circuit and Heating Coil]

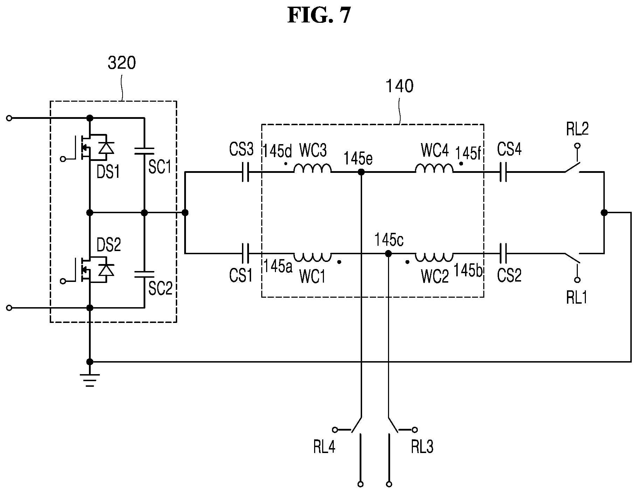

FIG. 6 is a diagram illustrating a connection structure between heating coils connected in series and in parallel with each other in a coil assembly according to an embodiment of the present disclosure. FIG. 7 is a circuit diagram illustrating a connection relationship between heating coils connected in series and in parallel with an inverter circuit in a cooking appliance according to an embodiment of the present disclosure.

Referring to FIGS. 6 and 7, the cooking appliance includes a load circuit including a rectifier circuit (not shown), an inverter circuit 320, a plurality of resonant capacitors, a plurality of heating coils, and a plurality of relays.

The rectifier circuit converts an AC voltage having the magnitude and polarity (positive voltage or negative voltage) varying over time, into a DC voltage having a constant magnitude and polarity, and converts an AC current having the magnitude and direction (positive current or negative current) varying over time, into a DC current having a constant magnitude, and provides the DC voltage and DC current to the inverter circuit 320.

The inverter circuit 320 receives the input voltage from the rectifier circuit, and perform the switching operation thereon to supply a resonating current to the load circuit under the control of the controller. The inverter circuit 320 may include a first inverter circuit and a second inverter circuit. The first inverter circuit may supply current to the first to fourth heating coils, and the second inverter circuit may supply current to the fifth to eighth heating coils.

The inverter circuit 320 includes a plurality of switching elements, for example, a first switching element DS1 and a second switching element DS2. The first switching element DS1 and the second switching element DS2 are connected in series to each other and are disposed between and connected to a high potential voltage terminal and a low potential voltage terminal. The inverter circuit 320 outputs a current according to the switching operation of the first switching element DS1 and the second switching element DS2.

The inverter circuit 320 supplies a resonant current to the first heating coil WC1 and the second heating coil WC2 or the third heating coil WC3 and the fourth heating coil WC4 according to the switching operation of the first switching element DS1 and the second switching element DS2. The resonance frequency of the resonant current is determined based on the inductance value of the heating coil and the capacitance value of the resonant capacitor.

The first switching element DS1 and the second switching element DS2 may be alternately turned on and off under the control of the controller. The turn-on and turn-off in the alternate manner of the first switching element DS1 and the second switching element DS2 may be referred to as switching operation of the first switching element DS1 and the second switching element DS2.

The resonant current is generated under the switching operation of the first switching element DS1 and the second switching element DS2, a magnetic field is generated when the resonant current is supplied to the heating coil, and an eddy current flows in a cooking vessel provided on top of the heating coil under the electromagnetic induction to heat the cooking vessel.

The inverter circuit 320 further includes a first snubber capacitor SC1 and a second snubber capacitor SC2. The first snubber capacitor SC1 is connected in parallel to the first switching element DS1, and the second snubber capacitor SC2 is connected in parallel to the second switching element SW2. The first snubber capacitor SC1 and the second snubber capacitor SC2 are connected to each other in series.

The first snubber capacitor SC1 and the second snubber capacitor SC2 serve to reduce power loss due to hard switching occurring when the first switching element DS1 and the second switching element DS2 are turned off.

The load circuit includes the plurality of resonant capacitors, the plurality of heating coils, and the plurality of relays.

The first resonant capacitor CS1 may be further connected to and disposed between the output terminal of the inverter circuit 320 and the first heating coil WC1. In addition, the second resonant capacitor CS2 and a first relay RL1 may be further connected to and disposed between the second heating coil WC2 and the ground voltage terminal.

In addition, the third resonant capacitor CS3 may be further connected to and disposed between the output terminal of the inverter circuit 320 and the third heating coil WC3. In addition, the fourth resonant capacitor CS4 and a second relay RL2 may be further connected to and disposed between the fourth heating coil WC4 and the ground voltage terminal.

In addition, the third relay RL3 may be further connected to and disposed between the third heating coil terminal 145c and other heating coils of the PCB pattern coil assembly 140. In addition, the fourth relay RL4 may be further connected to and disposed between the sixth heating coil terminal 145f and other heating coils of the PCB pattern coil assembly 140.

At least one of the first relay RL1, the second relay RL2, the third relay RL3, and the fourth relay RL4 may be turned on based on the size of the cooking vessel to form a current path.

For example, when the first relay RL1 is turned on, the direction in which the current flows in first heating coil WC1 and the direction in which the current flows in the second heating coil WC2 are opposite to each other, such that a magnetic field generated from the first heating coil WC1 and a magnetic field generated from the second heating coil WC2 cancel each other out. The magnetic field generated from the first heating coil WC1 and the magnetic field generated from the second heating coil WC2 cancel each other out, thereby generating a magnetic field in the cooking vessel under the electromagnetic induction. The magnetic field generated under the electromagnetic induction causes the eddy currents flowing in the cooking vessel to superimpose each other, such that the superimposition of eddy currents in the cooking vessel increases the heating performance and efficiency of the cooking appliance.

When the first relay RL1 and the second relay RL2 are turned on, the direction in which the current flows in first heating coil WC1 and the direction in which the current flows in the second heating coil WC2 are opposite to each other, such that a magnetic field generated from the first heating coil WC1 and a magnetic field generated from the second heating coil WC2 cancel each other out, and the direction in which the current flows in the third heating coil WC3 and the direction in which the current flows in the fourth heating coil WC4 are opposite to each other, such that a magnetic field generated from the third heating coil WC3 and a magnetic field generated from the fourth heating coil WC4 cancel each other out, and The magnetic field generated under the electromagnetic induction causes the eddy currents flowing in the cooking vessel to superimpose each other, such that the superimposition of eddy currents in the cooking vessel increases the heating performance and efficiency of the cooking appliance.

As described above, according to the present disclosure, the heating coils connected in series with each other are connected with each other in the anti-series with each other, the heating coils adjacent to each other in the left-right direction are connected with each other in the anti-series with each other, and the heating coils adjacent to each other in the front-rear direction are connected with each other in the anti-series with each other, such that the magnetic fields generated therefrom cancel each other out. This causes the eddy currents flowing in the cooking vessel to superimpose each other, such that the superimposition of eddy currents in the cooking vessel increases the heating performance and efficiency of the cooking appliance.

The load circuit may include at least one resonance capacitor CS1, CS2, CS3, and CS4 connected in series or in parallel with each other, at least one heating coil WC1, WC2, WC3, and WC4, and at least one relay RL1, RL2, RL3, and RL4.

The first heating coil WC1 is connected to the first heating coil terminal 145a and is formed in a pattern in which it winds from the outer area toward the center of the inner area in a clockwise direction. The second heating coil WC2 is connected to the second heating coil terminal 145b, and is formed in a pattern in which it winds toward the outer area from the center of the inner area in a counterclockwise direction. The third heating coil WC3 is connected to the fourth heating coil terminal 145d and is formed in a pattern in which it winds toward the outer area from the center of the inner area in a counterclockwise direction. The fourth heating coil WC4 is connected to the fifth heating coil terminal 145e and is formed in a pattern in which it winds from the outer area toward the center of the inner area in a clockwise direction.

Among the spacings between the patterns of each of the first to fourth heating coils WC1 to WC4, an spacing in the area overlapping the center of the sensing coil 143 may be the first distance d1 greater than an spacing in another area that does not overlap the center of the sensing coil. Each of the spacing between the first and second heating coils WC1 and WC2 and the spacing between the third and fourth heating coils WC3 and WC4 may be the second distance d2 greater than the diameter of the space formed in the center of the sensing coil 143.

The first heating coil WC1 and the third heating coil WC3 are connected to the output terminal of the inverter circuit 320 via the first heating coil terminal 145a and the fourth heating coil terminal 145d. The second heating coil WC2 and the fourth heating coil WC4 are connected to the ground voltage terminal via the second heating coil terminal 145b and the fifth heating coil terminal 145e.

The first heating coil WC1 receives the current supplied from the inverter circuit 320 via the first heating coil terminal 145a. The second heating coil WC2 receives the current supplied from the first heating coil WC1 via the inner terminal. The third heating coil WC3 receives the current supplied from the inverter circuit 320 via the fourth heating coil terminal 145d. The fourth heating coil WC4 receives the current supplied from the third heating coil WC3 via the inner terminal.

The resonant capacitors CS1, CS2, CS3, and CS4 may be used to filter a DC component from an output current of the inverter circuit 320. The heating coils WC1, WC2, WC3, and WC4 may be used to heat the cooking vessel using electromagnetic induction. The relays RL1, RL2, RL3, and RL4 may be used to selectively connect the heating coils WC1, WC2, WC3, and WC4 and other heating coils driven by another inverter circuit in series or in parallel with each other. In addition, the resonance frequency of the output current of the inverter circuit 320 may be determined according to inductance values of the heating coils WC1, WC2, WC3, and WC4 selectively connected in series or in parallel with each other and capacitance values of the resonant capacitors CS1, CS2, CS3, and CS4.

The load circuit may include the first resonant capacitor CS1 for transmitting the resonant current supplied from the inverter circuit 320, the first heating coil WC1 connected in series to the first resonant capacitor CS1, the second heating coil WC2 connected in series to the first heating coil WC1, the second resonant capacitor CS2 connected in series to the second heating coil WC2, and the first relay RL1 for switching the connection or disconnection between the second resonant capacitor CS2 and the ground voltage terminal.

In addition, the load circuit may further include the third resonant capacitor CS3 for transmitting the resonant current supplied from the inverter circuit 320, the third heating coil WC3 connected in series to the third resonant capacitor CS3, the fourth heating coil WC4 connected in series to the third heating coil WC3, the fourth resonant capacitor CS4 connected in series to the fourth heating coil WC4, and the second relay RL2 for switching the connection or disconnection between the fourth resonant capacitor CS4 and a ground voltage terminal.

In addition, the load circuit may further include the third relay RL3 for switching connection or disconnection between a node between the first heating coil WC1 and the second heating coil WC2 and other heating coils driven by another inverter circuit.

In addition, the load circuit may further include the fourth relay RL4 for switching connection or disconnection between a node between the third heating coil WC3 and the fourth heating coil WC4 and other heating coils driven by another inverter circuit.

The first to fourth relays RL1, RL2, RL3, and RL4 may be selectively turned on based on the size of the cooking vessel.

In one example, when the first relay RL1 and the third relay RL 3 are turned on, a current may flow through the first heating coil WC1, the second heating coil WC 3, and another heating coil. In this regard, the direction in which the current flows along the first heating coil WC1 and the direction in which the current flows along the second heating coil WC2 are opposite to each other. The direction in which the current flows along the second heating coil WC2 and the direction in which the current flows along another heating coil are opposite to each other.

In addition, for example, when the second relay RL2 and the fourth relay RL 4 are turned on, a current may flow through the third heating coil WC 3, the fourth heating coil WC 4, and other heating coils. In this regard, the direction in which the current flows along the third heating coil WC3 and the direction in which the current flows along the fourth heating coil WC4 are opposite to each other. The direction in which the current flows along the fourth heating coil WC2 and the direction in which the current flows along the seventh heating coil WC7 are opposite to each other.

As described above, according to the present disclosure, the spacing in the area overlapping the center of the sensing coil among the spacings between the patterns of the heating coil is greater than the spacing in the area that does not overlap the center of the sensing coil among the spacings between the patterns of the heating coil, thereby securing a space for the plurality of sensing coils and the plurality of temperature sensors.

According to the present disclosure, the spacing between the heating coils may be greater than a diameter of a space formed in the center of the sensing coil, such that a space for the plurality of sensing coils and a plurality of temperature sensors may be secured.

According to the present disclosure, the heating coils may be connected in series to each other via the wiring extending across the heating coils and positioned at positions corresponding to the centers thereof, such that the wirings of the plurality of heating coils may be optimally arranged.

According to the present disclosure, the heating coils connected in series to each other are respectively formed in the patterns such that the directions in which the current flows therein, respectively are opposite to each other. Thus, the magnetic field directions of magnetic fields respectively generated from a plurality of heating coils are opposite to each other such that the magnetic fields cancel each other.

According to the present disclosure, the heating coils connected in series with each other are respectively formed in the patterns such that the directions in which the current flows therein, respectively are opposite to each other, the heating coils adjacent to each other in the front-rear direction are respectively formed in the patterns such that the directions in which the current flows therein, respectively are opposite to each other, and/or the heating coils adjacent to each other in the left-right direction are respectively formed in the patterns such that the directions in which the current flows therein, respectively are opposite to each other. Thus, the magnetic field directions of magnetic fields respectively generated from a plurality of heating coils are opposite to each other such that the magnetic fields cancel each other. Thus, the magnetic fields cancelling each other cause the eddy currents flowing in the cooking vessel to superimpose each other, thereby increasing the heating performance and efficiency of the cooking appliance.

According to the present disclosure, the temperature sensor is respectively disposed in the center of each of a plurality of sensing coils, and the plurality of heating coil terminals connected to the plurality of heating coils, and the connector connected to the plurality of sensing coils and the temperature sensor are disposed in one side in the front-rear direction of an PCB pattern assembly, such that a space for the plurality of sensing coils and the plurality of temperature sensors may be secured, and the wirings of the plurality of heating coils, the plurality of sensing coils, and the wirings of the temperature sensor may be optimally arranged.

In addition, according to the present disclosure, the plurality of heating coils, the plurality of sensing coils, and the plurality of temperature sensors may be formed into the integral PCB pattern assembly, thereby contributing to the simplification of processes such as masking, printing, etching, etc.

In addition, according to the present disclosure, the heating coils connected in series to each other may be connected to each other via the wiring extending across the heating coils and positioned at the positions overlapping the centers thereof, such that the optimal wiring route may be implemented.

In addition, according to the present disclosure, the heating coil terminals respectively connected to the heating coils connected in series with each other may be disposed in one side in the front-rear direction of the PCB pattern assembly, thereby securing a space in which the wiring of the plurality of sensing coils and the wirings of the plurality of temperature sensors are disposed.

A coil assembly according to one aspect of the present disclosure may include a substrate; and a plurality of heating units disposed on the substrate, wherein each of the plurality of heating units may be formed in a winding pattern, wherein the plurality of heating units may be disposed in each of at least two layers, wherein the plurality of heating units may be electrically connected to each other, wherein the pattern of each of the plurality of heating units may wind a plurality of turns in each of the at least two layers, wherein an inter-turn area may be formed between adjacent ones of the plurality of turns, wherein at least one sensing coil may be disposed in a further layer different from the at least two layers and in an area overlapping the inter-turn area.

In accordance with one embodiment, a central area free of a pattern may be formed in a center of each of the plurality of heating units.

In accordance with one embodiment, the inter-turn area formed in an area in each of both opposing sides around the central area of each of the plurality of heating units may have a width greater than a width of the inter-turn area defined between adjacent turns of each heating unit in the area different from the area in each of both opposing sides.

In accordance with one embodiment, the inter-turn area may include different inter-turn areas having smaller and larger widths, wherein the sensing coil may be disposed in the further layer and in an area overlapping the inter-turn area having the larger width.

In accordance with one embodiment, the sensing coil may be formed in a winding pattern, wherein the sensing coils may be spaced apart from each other by a predetermined spacing.

In accordance with one embodiment, the heating unit and the sensing coil may be formed on the same substrate.

In accordance with one embodiment, the heating unit and the sensing coil may be formed on different substrates, wherein the substrate on which the heating unit is formed and the substrate on which the sensing coil is formed may be electrically connected via a terminal.

In accordance with one embodiment, a non-pattern area may be formed in each of the plurality of heating units, and a non-pattern area may be formed in a boundary area between adjacent ones of the plurality of heating units.

In accordance with one embodiment, respective central portions of at least four to at most six sensing coils may be disposed in the non-pattern areas of two heating unit areas arranged in a left-right direction or a front-rear direction among the plurality of heating units, wherein the sensing coil may not be disposed in a boundary area between the heating units arranged in the left-right direction.

In accordance with one embodiment, when four heating units are arranged in series or in parallel with each other, respective central portions of at least 12 to at most 14 sensing coils may be disposed in the non-pattern areas of the four heating unit areas, wherein the sensing coil may not be disposed in a boundary area between the heating units arranged in a left-right direction.

In accordance with one embodiment, the sensing coils may be disposed in each of at least two layers, and may be electrically connected to each other, wherein a plurality of sensing coils may be disposed in one layer of the at least two layers, wherein a plurality of sensing coils, a plurality of heating coil wirings, or a plurality of sensing coil wirings may be respectively or redundantly disposed in the remaining layers of the at least two layers.

In accordance with one embodiment, a temperature sensor may be further disposed in a center of the at least one sensing coil.

In accordance with one embodiment, the plurality of heating units may include a first heating coil and a second heating coil connected in series with other via a wiring.

In accordance with one embodiment, the first heating coil may include a first outer terminal and a first inner terminal, and may be formed in a pattern in which the first heating coil winds from the first outer terminal toward the first inner terminal in a clockwise direction, wherein the second heating coil may include a second inner terminal and a second outer terminal, and may be formed in a pattern in which the second heating coil winds from the second inner terminal toward the second outer terminal in a counterclockwise direction.

In accordance with one embodiment, a direction in which current flows in the first heating coil and a direction in which current flows in the second heating coil may be opposite to each other.

In accordance with one embodiment, the coil assembly may further comprise: a first heating coil terminal connected to the first outer terminal of the first heating coil via a first wiring; a second heating coil terminal connected to the second outer terminal of the second heating coil via a second wiring; and a third heating coil terminal connected to the first inner terminal of the first heating coil and the second inner terminal of the second heating coil via a third wiring.

In accordance with one embodiment, the first wiring, the second wiring, and the third wiring may be formed in the further layer in which the sensing coil is formed.

In accordance with one embodiment, the third wiring may be formed in the further layer in which the sensing coil is formed, and may extend across the first heating coil and the second heating coil and may be positioned at positions overlapping centers of the first and second heating coils.

In accordance with one embodiment, a resonant current may be applied to the first heating coil terminal and a ground voltage may be applied to the second heating coil terminal.

In accordance with one embodiment, the third heating coil terminal may be connected to a further heating coil via a relay.

In accordance with one embodiment, the coil assembly may further comprise a connector connected to the at least one sensing coil via a sensing coil wiring.

A cooking appliance according to an embodiment of the present disclosure includes a first heating coil formed in a pattern in a winding shape, and first and second sensing coils respectively disposed in both opposing sides around a center of the first heating coil so as to overlap the first heating coil. Among the spacings between the patterns of the first heating coil HC1, a spacing in an area overlapping the center of each of the first and second sensing coils may be a first distance greater than a spacing in another area that does not overlap the center of each of the first and second sensing coils.

According to an embodiment, the cooking appliance may further include a second heating coil disposed adjacent to the first heating coil in a front-rear direction, and third and fourth sensing coils disposed between the first heating coil and the second heating coil so as to overlap therewith.

According to an embodiment, a spacing between the first heating coil and the second heating coil may be a second distance greater than a diameter of a space formed in the center of each of the third and fourth sensing coils. The first distance and the second distance may be set to equal to each other.

According to an embodiment, a temperature sensor may be further disposed in each of the centers of the first to fourth sensing coils. The first and second heating coils, the first to fourth sensing coils, and the temperature sensor may be formed into an integral PCB pattern assembly.

According to an embodiment, the first heating coil and the second heating coil may be connected in series with each other. The first heating coil may be formed in a pattern in which it winds from the outer area to the center of the inner area in a clockwise direction, and the second heating coil may be formed in a pattern in which it winds from the center of the inner area to the outer area in a counterclockwise direction. The first heating coil and the second heating coil may be connected to each other such that the flow directions of the current therein are opposite to each other.

According to an embodiment, the cooking appliance may further include a first heating coil terminal connected to an outer terminal of the first heating coil via a wiring, a second heating coil terminal connected to an outer terminal of the second heating coil via a wiring, and a third heating coil terminal connected to an inner terminal of the first heating coil and an inner terminal of the second heating coil via a wiring extending across the first heating coil and the second heating coil and positioned at positions overlapping the centers thereof.

According to an embodiment, a resonant current may be applied to the first heating coil terminal, and a ground voltage may be applied to the second heating coil terminal. The third heating coil terminal may be connected to another heating coil via a relay.

A cooking appliance according to an embodiment of the present disclosure may include an integrated PCB pattern assembly in which a plurality of heating coils are disposed, wherein the PCB pattern assembly may include first and second heating coils disposed adjacent to each other in the front-rear direction, third and fourth heating coils respectively disposed adjacent to the first and second heating coils in the left-right direction, first and second sensing coils respectively disposed in both opposing sides around the center of each of the first to fourth heating coils so as to overlap therewith, and third and fourth sensing coils disposed between the first and second heating coils and between the third and fourth heating coils so as to overlap therewith.

According to an embodiment, among the spacings between the patterns of each of the first to fourth heating coils, a spacing in an area overlapping the center of each of the first and second sensing coils may be a first distance greater than an spacing in another area that does not overlap with the center of each of the first and second sensing coils.

According to an embodiment, each of the spacing between the first and second heating coils and the spacing between the third and fourth heating coils may be a second distance greater than the diameter of the space formed in the center of each of the third and fourth sensing coils.

According to an embodiment, a temperature sensor may be further disposed in the center of each of the first to fourth sensing coils, and the first to fourth heating coils, the first to fourth sensing coils, and the temperature sensor may be integrally formed into the PCB pattern assembly.

According to an embodiment, the first and second heating coils may be connected in series to each other, the third and fourth heating coils may be connected in series to each other, and the first and second heating coils and the third and fourth heating coils may be selectively connected in parallel to each other via first and second relays.

According to an embodiment, the first heating coil may be formed in a pattern in which it winds from the outer area toward the center of the inner area in a clockwise direction, the second heating coil may be formed in a pattern in which it winds from the center of the inner area toward the outer area in a counterclockwise direction, the third heating coil may be formed in a pattern in which it winds from the outer area toward the center of the inner area in a counterclockwise direction, and the fourth heating coil may be formed in a pattern in which it winds from the center of the inner area toward the outer area in a clockwise direction.

According to an embodiment, the cooking appliance may further include a first heating coil terminal connected to the outer terminal of the first heating coil via a wiring, a second heating coil terminal connected to the outer terminal of the second heating coil via a wiring, a third heating coil terminal connected to the inner terminal of the first heating coil and the inner terminal of the second heating coil via a wiring, a first connector connected to the first to fourth sensing coils disposed to overlap the first and second heating coils, a fourth heating coil terminal connected to the outer terminal of the third heating coil via a wiring, a fifth heating coil terminal connected to the outer terminal of the fourth heating coil via a wiring, a sixth heating coil terminal connected to the inner terminal of the third heating coil and the inner terminal of the fourth heating coil via a wiring, and a second connector connected to the first to fourth sensing coils disposed to overlap the third and fourth heating coils.

According to an embodiment, the first to sixth heating coil terminals and the first and second connectors may be disposed in one side in the front-rear direction of the PCB pattern assembly, a resonant current may be applied to the first and fourth heating coil terminals, a ground voltage may be applied to the second and fifth heating coil terminals, the third heating coil terminal may be selectively connected to a further heating coil via a third relay, and the sixth heating coil terminal may be selectively connected to a still further heating coil via a fourth relay.

Although the present disclosure has been described above with reference to the embodiments illustrated in the drawings, this is merely an example, and those skilled in the art will understand that various modifications and other equivalent embodiments may be derived therefrom. Accordingly, the true technical protection scope of the present disclosure should be determined based on the following claims.

## Claims

1. A coil assembly comprising:
a substrate; and
a plurality of heating units disposed on the substrate,
wherein each of the plurality of heating units is formed in a winding pattern, wherein the plurality of heating units are disposed in each of at least two layers, wherein the plurality of heating units are electrically connected to each other,
wherein the pattern of each of the plurality of heating units winds a plurality of turns in each of the at least two layers,
wherein an inter-turn area is formed between adjacent ones of the plurality of turns,
wherein at least one sensing coil is disposed in a further layer different from the at least two layers and in an area overlapping the inter-turn area.

2. The coil assembly of claim 1, wherein a central area free of a pattern is formed in a center of each of the plurality of heating units.

3. The coil assembly of claim 2, wherein the inter-turn area formed in an area in each of both opposing sides around the central area of each of the plurality of heating units has a width greater than a width of the inter-turn area defined between adjacent turns of each heating unit in the area different from the area in each of both opposing sides.

4. The coil assembly of claim 3, wherein the inter-turn area includes different inter-turn areas having smaller and larger widths, wherein the sensing coil is disposed in the further layer and in an area overlapping the inter-turn area having the larger width.

5. The coil assembly of claim 1, wherein the sensing coil is formed in a winding pattern, wherein the sensing coils are spaced apart from each other by a predetermined spacing.

6. The coil assembly of claim 1, wherein the heating unit and the sensing coil are formed on the same substrate.

7. The coil assembly of claim 1, wherein the heating unit and the sensing coil are formed on different substrates,
wherein the substrate on which the heating unit is formed and the substrate on which the sensing coil is formed are electrically connected via a terminal.

8. The coil assembly of claim 1, wherein a non-pattern area is formed in each of the plurality of heating units, and a non-pattern area is formed in a boundary area between adjacent ones of the plurality of heating units.

9. The coil assembly of claim 8, wherein respective central portions of at least four to at most six sensing coils are disposed in the non-pattern areas of two heating unit areas arranged in a left-right direction or a front-rear direction among the plurality of heating units,
wherein the sensing coil is not disposed in a boundary area between the heating units arranged in the left-right direction.

10. The coil assembly of claim 8, wherein when four heating units are arranged in series or in parallel with each other, respective central portions of at least 12 to at most 14 sensing coils are disposed in the non-pattern areas of the four heating unit areas,
wherein the sensing coil is not disposed in a boundary area between the heating units arranged in a left-right direction.

11. The coil assembly of claim 1, wherein the sensing coils are disposed in each of at least two layers, and are electrically connected to each other,
wherein a plurality of sensing coils are disposed in one layer of the at least two layers,
wherein a plurality of sensing coils, a plurality of heating coil wirings, or a plurality of sensing coil wirings are respectively or redundantly disposed in the remaining layers of the at least two layers.

12. The coil assembly of claim 1, wherein a temperature sensor is further disposed in a center of the at least one sensing coil.

13. The coil assembly of claim 1, wherein the plurality of heating units include a first heating coil and a second heating coil connected in series with other via a wiring,
wherein the first heating coil includes a first outer terminal and a first inner terminal, and is formed in a pattern in which the first heating coil winds from the first outer terminal toward the first inner terminal in a clockwise direction,
wherein the second heating coil includes a second inner terminal and a second outer terminal, and is formed in a pattern in which the second heating coil winds from the second inner terminal toward the second outer terminal in a counterclockwise direction.

14. The coil assembly of claim 13, wherein a direction in which current flows in the first heating coil and a direction in which current flows in the second heating coil are opposite to each other.

15. The coil assembly of claim 14, wherein the coil assembly further comprises:
a first heating coil terminal connected to the first outer terminal of the first heating coil via a first wiring;
a second heating coil terminal connected to the second outer terminal of the second heating coil via a second wiring; and
a third heating coil terminal connected to the first inner terminal of the first heating coil and the second inner terminal of the second heating coil via a third wiring.

16. The coil assembly of claim 15, wherein the first wiring, the second wiring, and the third wiring are formed in the further layer in which the sensing coil is formed.

17. The coil assembly of claim 15, wherein the third wiring is formed in the further layer in which the sensing coil is formed, and extends across the first heating coil and the second heating coil and is positioned at positions overlapping centers of the first and second heating coils.

18. The coil assembly of claim 15, wherein a resonant current is applied to the first heating coil terminal and a ground voltage is applied to the second heating coil terminal.

19. The coil assembly of claim 15, wherein the third heating coil terminal is connected to a further heating coil via a relay.

20. The coil assembly of claim 15, wherein the coil assembly further comprises a connector connected to the at least one sensing coil via a sensing coil wiring.
